(19)

Europäisches
Patentamt
European
Patent Office
Office européen
des brevets

(11) **EP 3 306 825 B1**

(12) **EUROPEAN PATENT SPECIFICATION**

(45) Date of publication and mention
of the grant of the patent:
**06.03.2019 Bulletin 2019/10**

(51) Int Cl.:
*H04B 3/23* (2006.01)      *H04L 5/14* (2006.01)

(21) Application number: **16306298.7**

(22) Date of filing: **04.10.2016**

(54) **TWO-STEP INITIALIZATION PROCEDURE FOR ADAPTIVE ANALOG ECHO CANCELLATION**

ZWEISTUFIGES INITIALISIERUNGSVERFAHREN ZUR ADAPTIVEN ANALOGEN
ECHOUNTERDRÜCKUNG

PROCÉDURE D'INITIALISATION EN DEUX ÉTAPES POUR SUPPRESSION D'ÉCHO ANALOGIQUE
ADAPTATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.04.2018 Bulletin 2018/15**

(73) Proprietor: **Alcatel Lucent
91620 Nozay (FR)**

(72) Inventors:
• **COOMANS, Werner
2018 Antwerp (BE)**

• **TYTGAT, Maarten
Murray Hill, NJ 07974-0636 (US)**

(74) Representative: **Nokia EPO representatives
Nokia Technologies Oy
Karaportti 3
02610 Espoo (FI)**

(56) References cited:
**EP-A2- 0 202 596          WO-A1-2015/178932
US-A1- 2003 235 294**

## Description

### Technical Field of the invention

The present invention relates to echo cancellation for full-duplex wired communication systems.

### Technical Background of the invention

Discrete Multi-Tone (DMT) communication paradigm combined with full-duplex transmission (all carriers are simultaneously used for both directions of communication) has proven to be particularly successful for achieving record-breaking transmission rates over copper medium, such as Unshielded Twisted Pairs (UTP) or TV broadcast cables.

Still, full-duplex is particularly challenging if the undesired transmit echo signal is much larger than the useful receive signal, and hence dominates at the input of the Analog to Digital Converter (ADC). The ADC typically accommodates a Variable Gain Amplifier (VGA) to amplify the voltage swings of the input analog signal to the optimal ADC voltage range and to have the lowest ADC noise contribution. In the presence of a strong echo signal, there is a severe degradation of the receiver signal to Noise Ratio (SNR) as the useful receive signal is submerged by the far more powerful echo signal. If the gain of the VGA is matched to the power of the useful receive signal, then the ADC saturates and this non-linear regime brings about spectral leakage that ripples across all tones yielding a corresponding increase of the noise power and again a degradation of the receiver SNR.

Echo cancellation techniques aims at attenuating the power of the echo signal at the receiver. This can be done in different ways.

As a first method, such as initially used for legacy Plain Old Telephony Service (POTS) equipment, the two 2-ports interfaces from the transmitter differential output and receiver differential input are connected to the single 2-ports interface of the subscriber line (a.k.a. tip and ring of the line) through a so-called hybrid network. The hybrid network is designed to subtract the transmit voltage from the line voltage at the receiver input, typically by means of hybrid coils or some resistive network. Unfortunately, the hybrid is unable to cope with the signal reflections arising from impedance mismatches along the loop or cable plant (bridged tap, passive couplers, etc) and echoing back into the receiver along the receive path.

As a second method, one could process the digital signal from the ADC in the frequency domain to mitigate the transmit echo signal contained therein. This method is clearly sub-optimal as the ADC input voltage is still dominated by the echo signal.

As a third method, one could combine the digital and analog approaches. The various echo contributions that are present in the receive signal are estimated, re-generated in the digital domain, converted in the analog domain by means of an additional Digital to Analog Converter (EDAC hereinafter), and subtracted from the receive signal in the analog domain at the input of the ADC. Alternatively, one could use properly weighted analog delay lines to generate an analog replica of the echo signal.

The gain of the VGA can now be matched to the power of the useful receive signal without inducing any signal clipping, and the receiver SNR is thus greatly improved. This third method is typically combined with a hybrid network: the hybrid removes most of the direct echo signal, and the EDAC kicks in to remove the remaining echo signals due to imperfect echo cancellation in the hybrid and the various delayed echoes that cannot be dealt with by the hybrid.

The third method requires the characterization of the echo coupling path, which acts as a multi-path fading channel. As the direct and various delayed impulse responses are still expected to be confined with the cyclic extension of the DMT symbols, a single complex coefficients suffices for characterizing the echo channel at a given tone.

An echo suppression signal $u_E$ is generated in the digital domain based on the so-characterized echo channel, and fed to the EDAC for further insertion at the input of the receiver ADC. The frequency sample at tone k of the echo cancellation signal $u_E$ is given by:

$$u_E^k = -\frac{h_E^k}{h_S^k} u_{TX}^k \quad (1),$$

wherein $h_E^k$ denotes a complex coefficient characterizing the echo coupling path spanning from the transmitter DAC up to the receiver ADC at tone k, $h_S^k$ denotes a complex coefficient characterizing the echo suppression path spanning from the EDAC up to the receiver ADC, and $u_{TX}^k$ denotes a transmit frequency sample at tone k generated by the near-end transmitter.

The echo cancellation gives rise to a "chicken and egg" problem:

- To be able to cancel the echo efficiently, one needs an accurate estimation of the echo coupling path at the nominal operating transmit power.
- To be able to get a good estimation of the echo coupling path at the nominal operating transmit power, one needs to have the EDAC already active otherwise the ADC would be saturated during estimation.

An estimation of the echo coupling path at higher transmit power is beneficial because the accuracy (variance) of the channel estimate is directly proportional to the signal power used. The same estimation accuracy can only be achieved with lower transmit power by increasing the number of measurement samples. For example, increasing the signal power by 20 dB is equivalent to increasing the number of measurements by a factor 100. To obtain the same channel estimation accuracy as an estimation with 20 dB more transmit power, one would hence need to perform measurements that take 100x longer.

Example of prior art systems and methods can be found in International Patent Applications WO 2015/178932 and WO 2004/114578, in US Patent Application US 2003/235294, and in the European Patent Application EP 0202596 A2.

## Summary of the Invention

It is an object of the present invention to accurately and quickly estimate the echo channel for efficient echo cancellation.

In accordance with a first aspect of the invention, a communication unit comprises an echo canceler configured to generate an echo suppression signal to be superimposed at a receiver input to a receive analog signal comprising at least one of a far-end signal received from a transmission medium and an echo signal resulting from a near-end signal being transmitted from a transmitter output over the transmission medium and coupling through an echo coupling path into the receiver input; and a controller configured to control the operation of the echo canceler. The controller is further configured to apply at least one first gain value across the echo coupling path for the receive analog signal to be power-constrained below a first power threshold at the receiver input, to receive first measurements of the receive analog signal performed while the near-end signal is being transmitted with the at least one first gain value in force and without the echo suppression signal being generated, and to determine a first estimate of the echo coupling path from the first measurements. The echo canceler is further configured to generate the echo suppression signal based on the first estimate. The controller is further configured thereupon to substitute at least one nominal gain value used for regular communication over the transmission medium for the respective at least one first gain value, to receive second measurements of the receive analog signal performed while the near-end signal is being transmitted with the at least one nominal gain value in force and while the echo suppression signal based on the first estimate is being generated and superimposed to the receive analog signal, and to determine a second estimate of the echo coupling path from the second measurements. The echo canceler is further configured to adjust the echo suppression signal based on the second estimate.

In accordance with another aspect of the invention, there is disclosed a method for controlling an echo suppression signal to be superimposed at a receiver input to a receive analog signal comprising at least one of a far-end signal received from a transmission medium and an echo signal resulting from a near-end signal being transmitted from a transmitter output over the transmission medium and coupling through an echo coupling path into the receiver input. The method comprises applying at least one first gain value across the echo coupling path for the receive analog signal to be power-constrained below a first power threshold at the receiver input; receiving first measurements of the receive analog signal performed while the near-end signal is being transmitted with the at least one first gain value in force and without the echo suppression signal being generated; determining a first estimate of the echo coupling path from the first measurements; generating the echo suppression signal based on the first estimate; thereupon substituting at least one nominal gain value used for regular communication over the transmission medium for the respective at least one first gain value; receiving second measurements of the receive analog signal performed while the near-end signal is being transmitted with the at least one nominal gain value in force and while the echo suppression signal based on the first estimate is being generated and superimposed to the receive analog signal; determining a second estimate of the echo coupling path from the second measurements; and adjusting the echo suppression signal based on the second estimate.

In one embodiment of the invention, the first power threshold is determined for the receive analog signal to conform to a linear range of an analog-to-digital converter at the receiver input.

In one embodiment of the invention, the at least one first gain value achieves a first total path loss across the echo coupling path that is order-of-magnitude lower than a nominal total path loss achieved across the echo coupling path by the at least one nominal gain value.

In one embodiment of the invention, the at least one first and nominal gain values respectively correspond to at least one of a first and nominal receive gain value of a variable gain amplifier configured to amplify the receive analog signal at the receiver input; a first and nominal transmit gain value of a line driver configured to amplify the near-end signal before transmission over the transmission medium; and a first and nominal signal scaling value used to synthesize the near-end signal at the transmitter output.

In one embodiment of the invention, the near-end signal is transmitted with the at least one first gain value in force and the first measurements are performed during a first initialization stage of a bi-directional communication path, and the near-end signal is transmitted with the at least one nominal gain value in force and the second measurements are performed during a second initialization stage of the bi-directional communication path.

In an alternative embodiment of the invention, the near-end signal is transmitted with the at least one first gain value in force and the first measurements are performed during a first initialization stage of a bi-directional communication path, and the near-end signal is transmitted with the at least one nominal gain value in force and the second measurements are performed after the bi-directional communication path is operational.

In one embodiment of the invention, during the first and second measurements, the receive analog signal comprises the echo signal only.

In an alternative embodiment of the invention, during the first and second measurements, the receive analog signal comprises both the far-end and echo signals, and the far-end and near-end signals are modulated by respective mutually-orthogonal channel probing sequences.

In still an alternative embodiment of the invention, during the first measurements, the receive analog signal comprises the echo signal only; and during the second measurements, the receive analog signal comprises both the far-end and echo signals, and the far-end and near-end signals are modulated by respective mutually-orthogonal channel probing sequences.

In one embodiment of the invention, the echo suppression signal is generated in the digital domain and converted in the analog domain by means of an additional digital-to-analog converter.

In an alternative embodiment of the invention, the echo suppression signal is generated in the analog domain by means of weighted analog delay lines.

Such a communication unit typically forms part of an access node providing broadband communication services to subscribers over a copper access plant, such as a Distribution Point Unit (DPU) or a Digital Subscriber Line Access Multiplexer (DSLAM) for broadband communication over copper pairs, or a Cable Modem Termination System (CMTS) for broadband communication over coaxial cables, or forms part of a Customer Premises Equipment (CPE), such as a subscriber modem, or a subscriber bridge, a subscriber router, or a subscriber terminal.

Embodiments of a method according to the invention correspond with the embodiments of a communication unit according to the invention.

In order to fully exploit the analog compensation and allow full duplex operation at power levels above which the ADC would saturate in the absence of the analog echo suppression signal, a two-step estimation approach is proposed.

In a first step, the EDAC is not active, and an estimate of the echo coupling channel is obtained at a transmit power lower than the desired operating transmit power. This low transmit power value is designed so as not to saturate the ADC, and therefore allows a "best-effort" initial estimate of the echo coupling channel.

Equivalently, one could lower the gain of the VGA at the receiver input while leaving the transmit power unchanged.

In a second step, the EDAC is activated based on this initial estimate, and a new estimation round is performed at the (higher) operational transmit power (or equivalently with the higher operational VGA gain). This new channel estimate is used to adjust the echo suppression signal, thereby improving its accuracy and hence the echo cancellation performance.

The same two-step initialization can be applied to an echo cancellation structure in which an analog replica is subtracted from the receive signal using weighted analog delay lines. The first step would then determine initial weights without activating the delay lines, and then these initial weight values are refined at increased power during the second step.

## Brief Description of the Drawings

The above and other objects and features of the invention will become more apparent and the invention itself will be best understood by referring to the following description of an embodiment taken in conjunction with the accompanying drawings wherein:

- fig. 1 represents a schematic overview of a communication unit operating in full-duplex mode; and
- fig. 2 represents further details about a communication unit as per the present invention.

## Detailed Description of the Invention

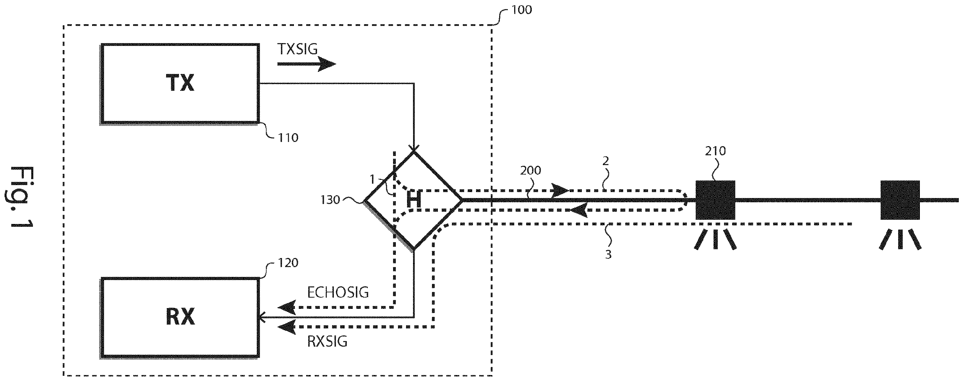

There is seen in fig. 1 a communication unit 100 for communication over a transmission medium 200 with one or more peer communication units.

The communication unit 100 uses Discrete Multi-Tone (DMT) modulation over closely-spaced orthogonal carriers (a.k.a. tones), and operates in full-duplex mode, that is to say the same carriers are simultaneously used for both downstream (towards the subscriber premises) and upstream (from the subscriber premises) communications. Thus, the aggregate capacity is doubled when compared to legacy techniques, such as Frequency Division Duplexing (FDD) for DOCSIS or xDSL communication, or Time Division Duplexing (TDD) for G.Fast communication.

The communication unit 100 comprises a transmitter 110; a receiver 120; and a hybrid 130. Such a communication unit typically forms part of an access node or a CPE.

The transmitter 110 and the receiver 120 comprises an analog part and a digital part.

The transmit analog part comprises a Digital-to-Analog Converter (DAC), and a line driver for amplifying the transmit signal and for driving the transmission medium 200. The receive analog part comprises a low-noise VGA for amplifying the receive signal with as little noise as possible, and an Analog-to-Digital Converter (ADC).

Some further analog components may be present along the transmit or receive analog path. For instance, the communication unit 100 may further include impedance-matching circuitry for adapting to the characteristic impedance of the transmission medium 200, and/or protection circuitry for protecting against any current or voltage surge occurring over the transmission medium 200, and/or isolation circuitry for DC-isolating the communication unit 100 from the transmission medium 200.

The digital part is typically implemented by means of one or more Digital Signal Processors (DSP), and is configured to operate downstream and upstream communication channels for conveying user traffic over the transmission medium 200, and downstream and upstream control channels for conveying control traffic over the transmission medium 200, such as diagnosis, management or on-line reconfiguration commands and responses. Control traffic is multiplexed with user traffic.

The digital part is further configured to execute the necessary initialization steps, such as channel analysis and channel training, for establishing a full bi-directional communication channel over the transmission medium 200 with one or more peer communication units.

More specifically, the digital part is for encoding and modulating user and control data into DMT symbols, and for demodulating and decoding user and control data from DMT symbols.

The following transmit steps are typically performed in the digital part:

- data encoding, such as data multiplexing, framing, scrambling, error correction encoding and interleaving;
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis coding;
- signal scaling;
- Inverse Fast Fourier Transform (IFFT);
- Cyclic Extension (CE) insertion; and possibly
- time-windowing.

The following receive steps are typically performed in the digital part:

- CE removal, and possibly time-windowing;
- Fast Fourier Transform (FFT);
- Frequency EQualization (FEQ);
- signal demodulation and detection, comprising the steps of applying to each and every equalized frequency sample an appropriate constellation grid, the pattern of which depends on the respective carrier bit loading, detecting the expected transmit constellation point and the corresponding transmit binary sequence encoded therewith, possibly with Trellis decoding, and reordering all the detected chunks of bits according to the carrier ordering table; and
- data decoding, such as data deinterleaving, error correction, de-scrambling, frame delineation and demultiplexing.

Some of these transmit or receive steps can be omitted, or some additional steps can be present, depending on the exact digital communication technology being used.

The receiver 120 supplies decoded payload data to an interworking function (not shown) for further upstream forwarding, and the other way around the interworking function supplies payload data to the transmitter 110 for further encoding and transmission over the transmission medium 200.

The interworking function typically includes some rate adaptation and traffic dispatching/prioritization logic.

The hybrid 130 is configured to pass a near-end transmit signal TXSIG from an output of the transmitter 110 to the transmission medium 200, and a receive far-end signal RXSIG from the transmission 200 to an input of the receiver 120, while achieving low transmitter-receiver coupling ratio, typically in the order of -30dB.

As depicted in fig. 1, and notwithstanding the hybrid function, there is a part 1 of the transmit signal TXSIG that directly leaks into the receiver input due to imperfect cancellation of the transmit signal in the hybrid 130, as well as a part 3 of the transmit signal 2 traveling along the transmission medium 200 that is reflected back towards the communication unit 100 on account of impedance mismatches, such as the presence of a bridged tap and associated coaxial coupler 210. The reflected signal 3 is treated as a regular receive signal by the hybrid 130 and passed to the receiver input. These two phenomena add to each other and results in a total echo signal ECHOSIG being superimposed to the receive signal RXSIG at the receiver input.

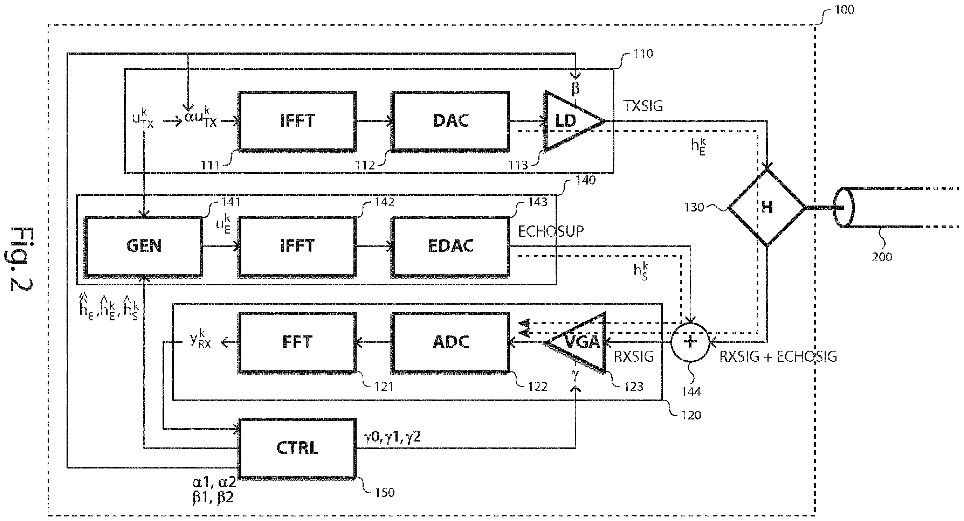

There is seen in fig. 2 further details about the communication unit 100.

The transmitter 110 comprises an IFFT unit 111 configured to synthesize a transmit signal in the time domain from transmit frequency samples $u_{TX}^k$ at respective tones k. The synthesized transmit signal is then fed (after CE insertion and possibly windowing) to a DAC 112 for digital-to-analog conversion. The resulting analog transmit signal is then amplified by a line driver with amplification gain $\beta$ to produce the analog transmit signal TXSIG.

The receiver 120 comprises a VGA 123 with variable gain $\gamma$ to amplify a receive signal. The output of the VGA 123 is coupled to an ADC 122 for analog-to-digital conversion of the receive signal. The receive time samples are then converted (after CE removal and possibly windowing) to the frequency domain by means of the FFT unit 121, thereby yielding receive frequency samples $y_{RX}^k$ at respective tones.

The gain of the VGA 123 is determined so as the amplified receive signal use the linear input range of the ADC 122 to its full extent (i.e., the quantification noise is minimized) and incurs as little clipping as possible (i.e., little signal saturation and thus little spectral leakage).

The amplitude distribution of the receive signal is a Gaussian distribution with zero mean and variance $\sigma_{RX}^2$ (equal to the receive power) as the receive signal is composed of many randomly-modulated sinusoidal carriers with respective amplitudes and phase superimposed to each other. Such a signal may incur large amplitude fluctuations as characterized by its Peak to Average Ratio (PAR). For instance, the gain of the VGA 123 can be determined such as the ADC 123 can accommodate up to $\pm 2\sigma_{RX}$ of voltage swings, $\sigma_{RX}$ denoting the standard deviation of the receive signal.

Let $h_E^k$ denote the complex coefficient characterizing the echo coupling channel spanning from the output of the DAC 112 to the input of the ADC 122 at tone k. And let $h_S^k$ denote the echo suppression channel spanning from the output of the EDAC 143 up to the input of the ADC 122 at tone k.

The communication unit 100 further comprises an echo canceler 140, which in turn comprises an echo generator 141 (or GEN) for generating echo suppression frequency samples $u_E^k$ at respective tones based on the transmit frequency samples $u_{TX}^k$ and an estimate of the echo coupling channel; a second IFFT unit 142 for synthesizing the echo suppression signal in the time domain; and an additional DAC (or EDAC) for digital-to-analog conversion (after CE insertion and possibly windowing) of the synthesized echo suppression signal, yielding an analog echo suppression signal ECHOSUP to be superimposed to the corrupted receive signal RXSIG + ECHOSIG by means of the adder 144. Ideally, ECHOSUP = - ECHOSIG.

The communication unit 100 further comprises a controller 150 coupled to the transmitter 110, to the receiver 120 and to the echo canceler 140.

The controller 150 (or CTRL) is configured to determine estimates of the echo coupling channel $h_E^k$ and of the echo suppression channel $h_S^k$. The channel estimates are passed to the echo canceler 140 for generation of an appropriate echo suppression signal.

The channel estimates are based on raw DFT samples as measured by the receiver 120 while a given probing signal, whose value is preliminary known, is being transmitted by the near-end transmitter 110 and/or by a peer communication unit. The probing signal is typically modulated by a preliminary known pseudorandom sequence, or by a probing sequence chosen from a set of mutually-orthogonal probing sequences, such as walsh-Hadamard binary sequences.

In order to avoid saturation of the ADC 122, the controller 150 (or CTRL) closely controls the amplification gains $\beta$ and $\gamma$ of the line driver 113 and the VGA 123, which amplification gains directly translating into a given power level at the input of the ADC 122. The controller 150 may further control the scaling gain $\alpha$ of the transmit frequency samples $u_{TX}^k$ (or equivalently of the corresponding time samples). The adjustment of the digital gain $\alpha$ is rather accurate and straightforward, whereas the adjustment of the analog gains $\beta$ and $\gamma$ might be imprecise. Yet a lower digital gain $\alpha$ also translates into higher quantification noise since the input range of the DAC 112 is not used to its full extent.

In a first step, the controller 150 determines an estimate $\hat{h}_S^k$ of the echo suppression channel $h_S^k$. An echo suppression signal is synthesized from preliminary known transmit frequency samples $u_E^k$, and the corresponding receive raw frequency samples $y_{RX}^k$ are measured. During this step, no near-end signal is transmitted by the transmitter 110, and no far-end communication signal is received from the transmission medium 200. The channel estimate $\hat{h}_S^k$ is then given by:

$$\hat{h}_S^k = \frac{y_{RX}^k}{u_E^k} \quad (2).$$

Typically, one performs some averaging across multiple measurement samples or channel estimates in order to reduce the variance, and thus to improve the accuracy, of the estimate.

The amplification gain $\gamma$ of the VGA 123 is adjusted to yo $\approx$ 1 as the output range of the EDAC 143 is expected to match the input range of the ADC 122. The amplification gain $\beta$ of the line driver and the scaling gain $\alpha$ are irrelevant.

If the output range of the EDAC 143 and the input range of the ADC 122 are different, then the VGA gain shall be adjusted as:

$$\gamma_0 = \frac{\Delta V_{ADC}}{\Delta V_{EDAC}} \quad (3),$$

wherein $\Delta V_{EDAC}$ and $\Delta V_{ADC}$ denotes the output voltage range of the EDAC 143 and the input voltage range of the ADC 122 respectively.

One could also use a digital scaling gain $\lambda$ for synthesizing the echo suppression signal ECHOSUP (not shown in fig. 2). The digital scaling gain $\lambda$ can be adjusted, individually or in combination with the analog VGA gain $\gamma$, such that the overall gain $\lambda.\gamma$ across the echo suppression path is approximately equal to 1 or $\frac{\Delta V_{ADC}}{\Delta V_{EDAC}}$.

In a second step, the controller 150 determines an initial estimate $\hat{h}_E^k$ of the echo coupling channel $h_E^k$.

As a first option, only the transmitter 110 is active during that second step, the remote communication unit is silent, and the echo canceler is disabled, meaning that only the echo signal ECHOSIG is present at the input of the VGA 123.

The controller 150 may assume a given path loss through the hybrid 130 and through the multiple reflection paths in order to determine the expected receive power level at the input of the VGA 123. For instance, the assumed path loss may correspond to a lower bound of the observed path losses.

The controller 150 then determines appropriate first gain values $\alpha_1$, $\beta_1$ and $\gamma_1$ to be used during this second step. The overall gain shall be approximately equal to 1 as the output range of the DAC 112 is expected to match the input range of the ADC 122, meaning that the first gain value satisfies the following relation:

$$\alpha_1 \cdot \beta_1 \cdot \rho_H \cdot \gamma_1 \approx 1 \quad (4),$$

wherein $\rho_H$ denotes the assumed path loss through the hybrid and through the multiple reflection paths.

If the output range of the DAC 112 and the input range of the ADC 122 are different, then relation (4) becomes:

$$\alpha_1 \cdot \beta_1 \cdot \rho_H \cdot \gamma_1 \approx \frac{\Delta V_{ADC}}{\Delta V_{DAC}} \quad (5),$$

wherein $\Delta V_{DAC}$ denotes the output voltage range of the DAC 112.

The controller passes the first gain values $\alpha_1$, $\beta_1$ and $\gamma_1$ to the transmitter 110, the line driver 113 and the VGA 123 for further enforcement. when the first gain values $\alpha_1$, $\beta_1$ and $\gamma_1$ are in force, a transmit signal is synthesized by the transmitter 110 from preliminary known transmit frequency samples $u_{TX}^k$ and transmitted over the transmission medium 200, while corresponding receive frequency samples $y_{RX}^k$ are measured. A first estimate $\hat{h}_E^k$ of the echo coupling channel $h_E^k$ is then given by:

$$\hat{h}_E^k = \frac{y_{RX}^k}{u_{TX}^k} \quad (6).$$

As a second option, both the transmitter 110 and the peer communication unit are active during this second step, meaning that the receive analog signal at the input of the VGA 123 is composed of the echo signal ECHOSIG and the far-end receive signal RXSIG. The first gain values $\alpha_1$, $\beta_1$ and $\gamma_1$ may be adjusted to account for the presence of the far-end receive signal RXSIG.

with this second option, one needs to use orthogonal modulation sequences for discriminating between the two signal contributions. Presently, the near-end transmit signal TXSIG and the far-end receive signal RXSIG are modulated with mutually-orthogonal probing sequences $S_1^k$ and $S_2^k$ respectively. The probing sequences $S_i^k$ are row vectors comprising L transmit frequency samples, typically with complex value $\frac{1}{\sqrt{2}}(1+j)$ or $-\frac{1}{\sqrt{2}}(1+j)$ (normalized to unit power), satisfying the orthogonality relation:

$$S_i^k\left(S_j^k\right)^T = L\,\delta_{ij} \quad (7),$$

wherein $\delta_{ij}$ denotes the Kronecker delta, and the superscript T denotes the matrix conjugate transpose.

The L corresponding receive frequency samples can indeed be written in matrix notation as:

$$Y_{RX}^k = h_E^k S_1^k + h_{RX}^k S_2^k + Z^k \quad (8),$$

wherein $Y_{RX}^k$ denotes a row vector of L receive frequency samples as measured by the receiver 120 while the probing signals are being transmitted, $Z^k$ denotes a row vector of L frequency noise samples, which is often assumed as being Additive white Gaussian Noise (AWGN), and $h_{RX}^k$ denotes the complex coefficient characterizing the receive path from the far-end transmitter up to the ADC 122.

In order to obtain an estimate $\hat{h}_E^k$ of the echo coupling channel $h_E^k$, one correlates the row of L receive samples with the probing sequence $S_1^k$ : $\quad Y_{RX}^k\left(S_1^k\right)^T = h_E^k S_1^k\left(S_1^k\right)^T + h_{RX}^k S_2^k\left(S_1^k\right)^T + Z^k\left(S_1^k\right)^T = L\,h_E^k + \tilde{z}^k$ ,

and

$$\hat{h}_E^k = \frac{Y_{RX}^k \left(S_1^k\right)^T}{L} \quad (9).$$

Similarly, an estimate $\hat{h}_{RX}^k$ of the receive channel $h_{RX}^k$ can be obtained as:

$$\hat{h}_{RX}^k = \frac{Y_{RX}^k \left(S_2^k\right)^T}{L} \quad (10).$$

Once initial estimates of the echo coupling channel $h_E^k$ and the echo suppression channel $h_S^k$ have been obtained, the controller 150 substitutes nominal gain values $\alpha_2$, $\beta_2$ and $\gamma_2$ for the first gain values $\alpha_1$, $\beta_1$ and $\gamma_1$ respectively. The nominal gain values $\beta_2$ and $\gamma_2$ are the amplification gain values that are used for regular communication over the transmission medium 200. Typically, the line driver gain $\beta_2$ is determined to meet a given transmit power level over the transmission medium 200, e.g. 4 or 8 dBm as total aggregate transmit power, while the VGA gain $\gamma_2$ is determined in dependence of the measured path loss $\left|h_{RX}^k\right|$ so as the achieve a given optimal power level at the input of the ADC 122 that minimizes the quantification noise while avoiding signal saturation. Consequently, we can expect the following relation to hold:

$$\alpha_1.\beta_1.\gamma_1 \ll \alpha_2.\beta_2.\gamma_2 \quad (11).$$

Once the nominal gain values $\alpha_2$, $\beta_2$ and $\gamma_2$ are in force, the controller 150 requests the echo canceler 140 to generate an echo suppression signal ECHOSUP based on the estimates $\hat{h}_E^k$ and $\hat{h}_S^k$ of the echo coupling channel $h_E^k$ and the echo suppression channel $h_S^k$.

Formula (1) needs to be slightly adapted to account for the change in amplification gains since the initial characterization of the echo suppression channel $h_S^k$ and the echo coupling channel $h_E^k$:

$$u_E^k = -\frac{\frac{\alpha_2 \beta_2 \gamma_2}{\alpha_1 \beta_1 \gamma_1} \hat{h}_E^k}{\frac{\gamma_2}{\gamma_0} \hat{h}_S^k} u_{TX}^k = -\frac{\alpha_2 \beta_2 \gamma_0 \hat{h}_E^k}{\alpha_1 \beta_1 \gamma_1 \hat{h}_S^k} u_{TX}^k \quad (12).$$

It is noteworthy that the echo suppression signal ECHOSUP is superimposed at the input of the VGA 123, that is to say midway along the coupling paths $h_E^k$ and $h_S^k$. Normally, we should evaluate the coupling channels from the output of the DAC 112 or EDAC 143 up to this insertion point. Yet, we can decompose the previously-defined echo coupling and suppression channels $h_E^k$ and $h_S^k$ as being the concatenation of a dedicated channel $h_{E,D}^k$ or $h_{S,D}^k$ spanning from the output of the DAC 112 or EDAC 143 up to the output of the adder 144, and a common channel $h_C^k$ spanning from the output of the adder 144 up to the input of the ADC 122. Then we have:

$$\frac{h_E^k}{h_S^k} = \frac{h_{E,D}^k h_C^k}{h_{S,D}^k h_C^k} = \frac{h_{E,D}^k}{h_{S,D}^k} \quad (13),$$

meaning that the echo signal generation as per eq. (12) is unaffected whether the dedicated paths $h_{E,D}^k$ and $h_{S,D}^k$ or the whole paths $h_E^k$ and $h_S^k$ are considered (only the relative phases and amplitudes between $h_E^k$ and $h_S^k$ are relevant).

In a third step, the echo suppression signal ECHOSUP is generated as per eq. (12), and superimposed to the analog receive signal by the adder 144 so as to destructively interfere with the spurious echo signal ECHOSIG.

As echo cancellation is now effective, more power is now available for estimation of the echo coupling channel $h_E^k$ (see eq. (11)), yielding more accurate channel estimates.

The controller 150 refines the estimate of the echo coupling channel $h_E^k$, and the echo canceler 140 adjusts the generation of the echo suppression signal ECHOSUP accordingly.

Again, two options are available: with or without the presence of a far-end receive signal RXSIG.

Without any far-end receive signal, a new estimate $\hat{\hat{h}}_E^k$ of the echo coupling channel $h_E^k$ is determined as:

$$\hat{\hat{h}}_E^k = \frac{y_{RX}^k}{u_{TX}^k} + \frac{\alpha_2 \beta_2 \gamma_0}{\alpha_1 \beta_1 \gamma_1} \hat{h}_E^k \quad (14).$$

With the presence of a far-end receive signal, a new estimate $\hat{\hat{h}}_E^k$ of the echo coupling channel $h_E^k$ is determined as:

$$\hat{\hat{h}}_E^k = \frac{Y_{RX}^k \left(S_2^k\right)^T}{L} + \frac{\alpha_2 \beta_2 \gamma_0}{\alpha_1 \beta_1 \gamma_1} \hat{h}_E^k \quad (15).$$

Alternatively, one could simply subtract the properly-weighted residual echo channel as observed after echo cancellation is effective from the initial channel estimate $\hat{h}_E^k$ to yield a refined estimate value $\hat{\hat{h}}_E^k$ of the echo coupling channel.

The echo canceler then adjusts the generation of the echo suppression signal ECHOSUP based on the new channel estimate $\hat{\hat{h}}_E^k$:

$$u_E^k = -\frac{\hat{\hat{h}}_E^k}{\frac{\gamma_2}{\gamma_0} \hat{h}_S^k} u_{TX}^k = -\frac{\gamma_0 \hat{\hat{h}}_E^k}{\gamma_2 \hat{h}_S^k} u_{TX}^k \quad (16).$$

The aforementioned first, second and third steps may take place during different operational phases of the communication unit 100.

For instance, the first step can be carried out offline, or together with the second step, in which case the echo suppression signal ECHOSUP and the near-end transmit signal TXSIG (and possibly the far-end signal RXSIG too) shall be modulated with orthogonal probing sequences.

The second and third steps shall be carried out while the hybrid 130 is properly connected to the transmission medium 200 as the impedance termination of the hybrid 130 as well as the topology and characteristics of the transmission medium 200 strongly influence the echo coupling path $h_E^k$.

For instance, the second and third steps can be performed during the initialization procedure of a bi-directional communication channel with one or more peer communication units. The second and third steps can be performed in full-duplex mode by using mutually-orthogonal probing sequences, or in half-duplex mode by using preliminary known probing signals. In the latter mode, the far-end communication unit is silent while the near-end communication unit characterizes its own echo coupling path, and the way around the near-end communication unit is silent while the far-end communication unit characterizes its own echo coupling path.

Alternatively, the second step can be performed during the initialization procedure, while the third step is performed during normal operation (a.k.a. showtime).

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, Digital Signal Processor (DSP) hardware, network processor, Application Specific Integrated Circuit (ASIC), Field Programmable Gate Array (FPGA), etc. Other hardware, conventional and/or custom, such as Read Only Memory (ROM), Random Access Memory (RAM), and non volatile storage, may also be included.

**Claims**

1. **A communication unit** (100) comprising:

    - **an echo canceler** (140) configured to generate **an echo suppression signal** (ECHOSUP) to be superimposed at **a receiver input** to **a receive analog signal** comprising at least one of **a far-end signal** (RXSIG) received from **a transmission medium** (200) and **an echo signal** (ECHOSIG) resulting from **a near-end signal** (TXSIG) being transmitted from **a transmitter output** over the transmission medium and coupling through **an echo coupling path** ( $h_E^k$ ) into the receiver input; and

    - **a controller** (150) configured to control the operation of the echo canceler,

    **characterised in that** the controller is further configured to apply **at least one first gain value** ($\alpha_1$, $\beta_1$ $\gamma_1$) across the echo coupling path for the receive analog signal to be power-constrained below **a first power threshold** at the receiver input, to receive **first measurements** of the receive analog signal performed while the near-end signal is being transmitted with the at least one first gain value in force and without the echo suppression signal being generated, and to determine **a first estimate** ( $\hat{h}_E^k$ ) of the echo coupling path from the first measurements, *wherein* the echo canceler is further configured to generate the echo suppression signal based on the first estimate, *wherein* the controller is further configured thereupon to substitute **at least one nominal gain value** ($\alpha_2$, $\beta_2$, $\gamma_2$) used for regular communication over the transmission medium for the respective at least one first gain value, to receive **second measurements** of the receive analog signal performed while the near-end signal is being transmitted with the at least one nominal gain value in force and while the echo suppression signal based on the first estimate is being generated and superimposed to the receive analog signal, and to determine **a second estimate** ( $\hat{\hat{h}}_E^k$ ) of the echo coupling path from the second measurements, *and wherein* the echo canceler is further configured to adjust the echo suppression signal based on the second estimate.

2. **A communication unit** (100) according to claim 1, *wherein* the first power threshold is determined for the receive analog signal to conform to **a linear range** of **an analog-to-digital converter** (122) at the receiver input.

3. **A communication unit** (100) according to claim 1, *wherein* the at least one first gain value achieves **a first total path loss** across the echo coupling path that is order-of-magnitude lower than **a nominal total path loss** achieved across the echo coupling path by the at least one nominal gain value.

4. **A communication unit** (100) according to claim 1, *wherein* the at least one first and nominal gain values respectively correspond to at least one of:

    - **a first and nominal receive gain value** ($\gamma_1$, $\gamma_2$) of **a variable gain amplifier** (123) configured to amplify the receive analog signal at the receiver input;
    - **a first and nominal transmit gain value** ($\beta_1$, $\beta_2$) of **a line driver** (113) configured to amplify the near-end signal before transmission over the transmission medium; and
    - **a first and nominal signal scaling value** ($\alpha_1$, $\alpha_2$) used to synthesize the near-end signal at the transmitter output.

5. **A communication unit** (100) according to claim 1, *wherein* the near-end signal is transmitted with the at least one first gain value in force and the first measurements are performed during a **first initialization stage** of **a bi-directional communication path,** and the near-end signal is transmitted with the at least one nominal gain value in force and the second measurements are performed during **a second initialization stage** of the bi-directional communication path.

6. **A communication unit** (100) according to claim 1, *wherein* the near-end signal is transmitted with the at least one first gain value in force and the first measurements are performed during **a first initialization stage** of **a bi-directional communication path**, and the near-end signal is transmitted with the at least one nominal gain value in force and the second measurements are performed after the bi-directional communication path is operational.

7. **A communication unit** (100) according to claim 1, *wherein,* during the first and second measurements, the receive analog signal comprises the echo signal only.

8. **A communication unit** (100) according to claim 1, *wherein,* during the first and second measurements, the receive analog signal comprises both the far-end and echo signals, and the far-end and near-end signals are modulated by respective **mutually-orthogonal channel probing sequences.**

9. **A communication unit** (100) according to claim 1, *wherein,* during the first measurements, the receive analog signal comprises the echo signal only,
*and wherein,* during the second measurements, the receive analog signal comprises both the far-end and echo signals, and the far-end and near-end signals are modulated by respective **mutually-orthogonal channel probing sequences.**

10. **A communication unit** (100) according to claim 1, *wherein* the echo suppression signal is generated in the digital domain and converted in the analog domain by means of **an additional digital-to-analog converter** (143).

11. **A communication unit** (100) according to claim 1, *wherein* the echo suppression signal is generated in the analog domain by means of **weighted analog delay lines.**

12. **A Cable Modem Termination System CMTS** comprising **a communication unit** (100) according to any of claims 1 to 11.

13. **A Distribution Point Unit DPU** comprising **a communication unit** (100) according to any of claims 1 to 11.

14. **A Customer Premises Equipment CPE** comprising **a communication unit** (100) according to any of claims 1 to 11.

15. **A method** for controlling **an echo suppression signal** (ECHOSUP) to be superimposed at **a receiver input** to a **receive analog signal** comprising at least one of **a far-end signal** (RXSIG) received from **a transmission medium** (200) and **an echo signal** (ECHOSIG) resulting from **a near-end signal** (TXSIG) being transmitted from **a trans-**

**mitter output** over the transmission medium and coupling through **an echo coupling path** ( $h_E^k$ ) into the receiver input,

**characterised in that** the method comprises:

- applying **at least one first gain value** ($\alpha_1$, $\beta_1$, $\gamma_1$) across the echo coupling path for the receive analog signal to be power-constrained below **a first power threshold** at the receiver input;
- receiving **first measurements** of the receive analog signal performed while the near-end signal is being transmitted with the at least one first gain value in force and without the echo suppression signal being generated;
- determining **a first estimate** ( $\hat{h}_E^k$ ) of the echo coupling path from the first measurements;
- generating the echo suppression signal based on the first estimate;
- thereupon substituting **at least one nominal gain value** ($\alpha_2$, $\beta_2$, $\gamma_2$) used for regular communication over the transmission medium for the respective at least one first gain value;
- receiving **second measurements** of the receive analog signal performed while the near-end signal is being transmitted with the at least one nominal gain value in force and while the echo suppression signal based on the first estimate is being generated and superimposed to the receive analog signal;
- determining **a second estimate** ( $\hat{\hat{h}}_E^k$ ) of the echo coupling path from the second measurements; and
- adjusting the echo suppression signal based on the second estimate.

**Patentansprüche**

1.  Kommunikationseinheit (100), umfassend:

    - einen Echokompensator (140), der konfiguriert ist, um ein Echounterdrückungssignal (ECHOSUP) zu erzeugen, das an einem Empfängereingang auf ein analoges Empfangssignal überlagert werden soll, welches ein Far-End-Signal (RXSIG), das von einem Übertragungsmedium (200) empfangen wird, und/oder ein Echosignal (ECHOSIG), das aus einem Near-End-Signal (TXSIG) hervorgeht, das von einem Senderausgang über das Übertragungsmedium übertragen wird, umfasst und durch einen Echokopplungspfad ( $h_E^k$ ) in den Empfängereingang gekoppelt wird; und
    - eine Steuerung (150), die konfiguriert ist, um den Betrieb des Echokompensators zu steuern,

    **dadurch gekennzeichnet, dass**
    die Steuerung ferner konfiguriert ist, um mindestens einen ersten Verstärkungswert ($\alpha_1$, $\beta_1$, $\gamma_1$) über den Echokopplungspfad für das analoge Empfangssignal anzuwenden, welches unterhalb eines ersten Leistungsschwellenwerts am Empfängereingang leistungseingeschränkt sein soll, um erste Messungen des analogen Empfangssignals zu empfangen, die durchgeführt werden, während das Near-End-Signal mit dem mindestens einen gültigen ersten Verstärkungswert übertragen wird und ohne dass dabei das Echounterdrückungssignal erzeugt wird, und um eine erste Schätzung ( $\hat{h}_E^k$ ) des Echokopplungspfads aus den ersten Messungen zu bestimmen,

    wobei der Echokompensator ferner konfiguriert ist, um das Echounterdrückungssignal basierend auf der ersten Schätzung zu erzeugen,
    wobei die Steuerung ferner dazu konfiguriert ist, um daraufhin mindestens einen nominalen Verstärkungswert ($\alpha_2$, $\beta_2$, $\gamma_2$) zu ersetzen, der für die regelmäßige Kommunikation über das Übertragungsmedium für den jeweiligen mindestens einen ersten Verstärkungswert verwendet wird, um zweite Messungen des analogen Empfangssignals zu empfangen, die durchgeführt werden, während das Near-End-Signal mit dem mindestens einen gültigen nominalen Verstärkungswert übertragen wird und während das Echounterdrückungssignal basierend auf der ersten Schätzung erzeugt und dem analogen Empfangssignal überlagert wird, und um eine zweite Schätzung ( $\hat{\hat{h}}_E^k$ ) des Echokopplungspfads aus den zweiten Messungen zu bestimmen,
    und wobei der Echokompensator ferner konfiguriert ist, um das Echounterdrückungssignal basierend auf der zweiten Schätzung einzustellen.

**2.** Kommunikationseinheit (100) nach Anspruch 1,
wobei bestimmt wird, dass der erste Leistungsschwellenwert für das analoge Empfangssignal einem linearen Bereich eines Analog-Digital-Wandlers (122) am Empfängereingang entspricht.

**3.** Kommunikationseinheit (100) nach Anspruch 1,
wobei der mindestens eine erste Verstärkungswert einen ersten Gesamtpfadverlust über den Echokopplungspfad erzielt, der um eine Größenordnung niedriger ist als ein nominaler Gesamtpfadverlust, der über den Echokopplungspfad durch den mindestens einen nominalen Verstärkungswert erreicht wird.

**4.** Kommunikationseinheit (100) nach Anspruch 1,
wobei der mindestens eine erste bzw. der nominale Verstärkungswert mindestens einem der folgenden entspricht:

- einem ersten und nominalen Empfangsverstärkungswert ($\gamma 1$, $\gamma 2$) eines Verstärkers mit variabler Verstärkung (123), der konfiguriert ist, um das analoge Empfangssignal am Empfängereingang zu verstärken;
- einem ersten und nominalen Übertragungsverstärkungswert ($\beta 1$, $\beta 2$) eines Leitungstreibers (113), der konfiguriert ist, um das Near-End-Signal vor der Übertragung über das Übertragungsmedium zu verstärken; und
- einem erstem und nominalen Signal-Skalierungswert ($\alpha 1$, $\alpha 2$), der verwendet wird, um das Near-End-Signal am Senderausgang zu synthetisieren.

**5.** Kommunikationseinheit (100) nach Anspruch 1, wobei das Near-End-Signal mit dem mindestens einen gültigen ersten Verstärkungswert übertragen wird und die ersten Messungen durchgeführt werden, während einer ersten Initialisierungsstufe eines bidirektionalen Kommunikationspfads durchgeführt, und das Near-End-Signal mit dem mindestens einen gültigen nominalen Verstärkungswert übertragen wird und die zweiten Messungen durchgeführt werden, während einer zweiten Initialisierungsstufe des bidirektionalen Kommunikationspfads.

**6.** Kommunikationseinheit (100) nach Anspruch 1,
wobei das Near-End-Signal mit dem mindestens einen gültigen ersten Verstärkungswert übertragen wird und die ersten Messungen durchgeführt werden, während einer ersten Initialisierungsstufe eines bidirektionalen Kommunikationspfads, und das Near-End-Signal mit dem mindestens einen gültigen nominalen Verstärkungswert übertragen wird und die zweiten Messungen durchgeführt werden, nachdem der bidirektionale Kommunikationspfad betriebsbereit ist.

**7.** Kommunikationseinheit (100) nach Anspruch 1,
wobei das analoge Empfangssignal während der ersten und zweiten Messungen nur das Echosignal umfasst.

**8.** Kommunikationseinheit (100) nach Anspruch 1,
wobei das analoge Empfangssignal während der ersten und zweiten Messungen sowohl das Far-Endals auch das Echosignal umfasst, und das Far-End- und das Near-End-Signal durch jeweilige zueinander orthogonale Kanalabtastsequenzen moduliert werden.

**9.** Kommunikationseinheit (100) nach Anspruch 1,
wobei das analoge Empfangssignal während der ersten Messungen nur das Echosignal umfasst,
und wobei das analoge Empfangssignal während der zweiten Messungen sowohl das Far-End- als auch das Echosignal umfasst, und das Far-End-Signal und das Near-End-Signal durch jeweilige zueinander orthogonale Kanalabtastsequenzen moduliert werden.

**10.** Kommunikationseinheit (100) nach Anspruch 1,
wobei das Echounterdrückungssignal in dem digitalen Bereich erzeugt und in den analogen Bereich mittels eines zusätzlichen Digital-Analog-Wandlers (143) umgewandelt wird.

**11.** Kommunikationseinheit (100) nach Anspruch 1,
wobei das Echounterdrückungssignal in dem analogen Bereich mittels gewichteter analoger Verzögerungsleitungen erzeugt wird.

**12.** Kabelmodem-Abschlusssystem, CMTS, umfassend eine Kommunikationseinheit (100) nach einem der Ansprüche 1 bis 11.

**13.** Verteilungspunkteinheit, DPU, umfassend eine Kommunikationseinheit (100) nach einem der Ansprüche 1 bis 11.

**14.** Kundenstandortanlage, CPE, umfassend eine Kommunikationseinheit (100) nach einem der Ansprüche 1 bis 11.

**15.** Verfahren zum Steuern eines Echounterdrückungssignals (ECHOSUP), das an einem Empfängereingang auf ein analoges Empfangssignal überlagert werden soll, das ein Far-End-Signal (RXSIG), das von einem Übertragungsmedium (200) empfangen wird, und/oder ein Echosignal (ECHOSIG), das aus einem Near-End-Signal (TXSIG) resultiert, das von einem Senderausgang über das Übertragungsmedium übertragen wird, umfasst und durch einen Echokopplungspfad $\left( h_E^k \right)$ in den Empfängereingang gekoppelt wird,

**dadurch gekennzeichnet, dass** das Verfahren umfasst:

- Anwenden mindestens eines ersten Verstärkungswerts ($\alpha_1$, $\beta_1$, $\gamma_1$) über den Echokopplungspfad für das analoge Empfangssignal, welches unterhalb eines ersten Leistungsschwellenwerts am Empfängereingang leistungseingeschränkt sein soll;
- Empfangen von ersten Messungen des analogen Empfangssignals, die durchgeführt werden, während das Near-End-Signal mit dem mindestens einen gültigen ersten Verstärkungswert übertragen wird und ohne dass dabei das Echounterdrückungssignal erzeugt wird;
- Bestimmen einer ersten Schätzung $\left( \hat{h}_E^k \right)$ des Echokopplungspfads aus den ersten Messungen;
- Erzeugen des Echounterdrückungssignals basierend auf der ersten Schätzung;
- Ersetzen mindestens eines nominalen Verstärkungswerts ($\alpha_2$, $\beta_2$, $\gamma_2$) daraufhin, der für die regelmäßige Kommunikation über das Übertragungsmedium für den jeweiligen mindestens einen ersten Verstärkungswert verwendet wird;
- Empfangen von zweiten Messungen des analogen Empfangssignals, die durchgeführt werden, während das Near-End-Signal mit dem mindestens einen gültigen nominalen Verstärkungswert übertragen wird und während das Echounterdrückungssignal basierend auf der ersten Schätzung erzeugt und dem analogen Empfangssignal überlagert wird;
- Bestimmen einer zweiten Schätzung $\left( \hat{\hat{h}}_E^k \right)$ des Echokopplungspfads aus den zweiten Messungen; und
- Einstellen des Echounterdrückungssignals basierend auf der zweiten Schätzung.

**Revendications**

**1.** Unité de communication (100) comprenant :

- un annuleur d'écho (140) configuré pour générer un signal de suppression d'écho (ECHOSUP) qui doit être superposé, au niveau d'une entrée de récepteur, à un signal analogique de réception comprenant un signal d'extrémité distante (RXSIG) reçu d'un moyen de transmission (200) et/ou un signal d'écho (ECHOSIG) résultant d'un signal d'extrémité proche (TXSIG) qui est transmis à partir d'une sortie d'émetteur sur le moyen de transmission et qui est couplé par l'intermédiaire d'un trajet de couplage d'écho $\left( h_E^k \right)$ dans l'entrée de récepteur ; et

- un dispositif de commande (150) configuré pour commander le fonctionnement de l'annuleur d'écho, **caractérisé en ce que**

le dispositif de commande est en outre configuré pour appliquer au moins une première valeur de gain ($\alpha 1$, $\beta 1$, $\gamma 1$) sur tout le trajet de couplage d'écho pour que le signal analogique de réception subisse une contrainte de puissance en dessous d'un premier seuil de puissance au niveau de l'entrée de récepteur, pour recevoir des premières mesures du signal analogique de réception effectuées pendant que le signal d'extrémité proche est transmis avec la ou les premières valeurs de gain en vigueur et sans que le signal de suppression d'écho ne soit généré, et pour déterminer une première estimation du trajet de couplage d'écho à partir des premières mesures, *dans laquelle* l'annuleur d'écho est en outre configuré pour générer le signal de suppression d'écho en se basant sur la première estimation, *dans laquelle* le dispositif de commande est en outre configuré pour alors substituer au moins une valeur de gain nominale ($\alpha 2$, $\beta 2$, $\gamma 2$) utilisée pour une communication régulière sur le moyen de transmission pour la ou les premières valeurs de gain respectives, pour recevoir des secondes mesures du signal analogique de réception effectuées pendant que le signal d'extrémité proche est transmis avec la ou les valeurs de gain nominales en vigueur et pendant que le signal de suppression d'écho basé sur la première estimation est généré et superposé sur le signal analogique de réception, et pour déterminer une seconde estimation $(\hat{h}_E^k)$ du trajet de couplage d'écho à partir des secondes mesures,

*et dans laquelle* l'annuleur d'écho est en outre configuré pour régler le signal de suppression d'écho en se basant sur la seconde estimation.

2. Unité de communication (100) selon la revendication 1, *dans laquelle* le premier seuil de puissance est déterminé pour que le signal analogique de réception soit conforme à une plage linéaire d'un convertisseur analogique-numérique (122) au niveau de l'entrée de récepteur.

3. Unité de communication (100) selon la revendication 1, *dans laquelle* la ou les premières valeurs de gain obtiennent une première perte de trajet totale sur tout le trajet de couplage d'écho qui est un ordre de grandeur inférieur à une perte de trajet totale nominale obtenue sur tout le trajet de couplage d'écho par la ou les valeurs de gain nominales.

4. Unité de communication (100) selon la revendication 1, *dans laquelle* la ou les premières valeurs de gain nominales correspondent respectivement :

   - à une première valeur de gain de réception nominale ($\gamma 1$, $\gamma 2$) d'un amplificateur de gain variable (123) configuré pour amplifier le signal analogique de réception au niveau de l'entrée de récepteur ; et/ou
   - à une première valeur de gain de transmission nominale ($\beta 1$, $\beta 2$) d'un circuit d'attaque de ligne (113) configuré pour amplifier le signal d'extrémité proche avant une transmission sur le moyen de transmission ; et/ou
   - à une première valeur de mise à l'échelle de signal nominale ($\alpha 1$, $\alpha 2$) utilisée pour synthétiser le signal d'extrémité proche au niveau de la sortie d'émetteur.

5. Unité de communication (100) selon la revendication 1, *dans laquelle* le signal d'extrémité proche est transmis avec la ou les premières valeurs de gain en vigueur et les premières mesures sont effectuées pendant une première étape d'initialisation d'un trajet de communication bidirectionnel et le signal d'extrémité proche est transmis avec la ou les valeurs de gain nominales en vigueur et les secondes mesures sont effectuées pendant une seconde étape d'initialisation du trajet de communication bidirectionnel.

6. Unité de communication (100) selon la revendication 1, *dans laquelle* le signal d'extrémité proche est transmis avec la ou les premières valeurs de gain en vigueur et les premières mesures sont effectuées pendant une première étape d'initialisation d'un trajet de communication bidirectionnel et le signal d'extrémité proche est transmis avec la ou les valeurs de gain nominales en vigueur et les secondes mesures sont effectuées après que le trajet de communication bidirectionnel est opérationnel.

7. Unité de communication (100) selon la revendication 1, *dans laquelle,* pendant les premières et secondes mesures, le signal analogique de réception comprend seulement le signal d'écho.

8. Unité de communication (100) selon la revendication 1, *dans laquelle,* pendant les premières et secondes mesures, le signal analogique de réception comprend à la fois le signal d'extrémité distante et le signal d'extrémité proche et le signal d'extrémité distante et le signal d'extrémité proche sont modulés par des séquences de sondage de canal mutuellement orthogonales respectives.

9. Unité de communication (100) selon la revendication 1, *dans laquelle,* pendant les premières mesures, le signal analogique de réception comprend seulement le signal d'écho,
*et dans laquelle,* pendant les secondes mesures, le signal analogique de réception comprend à la fois le signal d'extrémité distante et le signal d'extrémité proche et le signal d'extrémité distante et le signal d'extrémité proche sont modulés par des séquences de sondage de canal mutuellement orthogonales respectives.

10. Unité de communication (100) selon la revendication 1, *dans laquelle* le signal de suppression d'écho est généré dans le domaine numérique et converti dans le domaine analogique au moyen d'un convertisseur numérique-analogique supplémentaire (143).

11. Unité de communication (100) selon la revendication 1, *dans laquelle* le signal de suppression d'écho est généré dans le domaine analogique au moyen de lignes de retard analogiques pondérées.

12. Système de terminaison de modem câble (CMTS) comprenant une unité de communication (100) selon l'une quelconque des revendications 1 à 11.

13. Unité de point de distribution (DPU) comprenant une unité de communication (100) selon l'une quelconque des revendications 1 à 11.

14. Équipement des locaux d'abonné (CPE) comprenant une unité de communication (100) selon l'une quelconque des revendications 1 à 11.

15. Procédé pour commander un signal de suppression d'écho (ECHOSUP) qui doit être superposé, au niveau d'une entrée de récepteur, sur un signal analogique de réception comprenant un signal d'extrémité distante (RXSIG) reçu d'un moyen de transmission (200) et/ou un signal d'écho (ECHOSIG) résultant d'un signal d'extrémité proche (TXSIG) qui est transmis à partir d'une sortie d'émetteur sur le moyen de transmission et qui est couplé par l'intermédiaire d'un trajet de couplage d'écho $(h_E^k)$ dans l'entrée de récepteur,

**caractérisé en ce que** le procédé consiste :

- à appliquer au moins une première valeur de gain ($\alpha$1, $\beta$1, $\gamma$1) sur tout le trajet de couplage d'écho pour que le signal analogique de réception subisse une contrainte de puissance en dessous d'un premier seuil de puissance au niveau de l'entrée de récepteur ;
- à recevoir des premières mesures du signal analogique de réception effectuées pendant que le signal d'extrémité proche est transmis avec la ou les premières valeurs de gain en vigueur et sans que le signal de suppression d'écho ne soit généré ;
- à déterminer une première estimation $(\hat{h}_E^k)$ du trajet de couplage d'écho à partir des premières mesures ;
- à générer le signal de suppression d'écho en se basant sur la première estimation ;
- à substituer alors au moins une valeur de gain nominale ($\alpha$2, $\beta$2, $\gamma$2) utilisée pour une communication régulière sur le moyen de transmission pour la ou les premières valeurs de gain respectives ;
- à recevoir des secondes mesures du signal analogique de réception effectuées pendant que le signal d'extrémité proche est transmis avec la ou les valeurs de gain nominales en vigueur et pendant que le signal de suppression d'écho basé sur la première estimation est généré et superposé sur le signal analogique de réception ;
- à déterminer une seconde estimation $(\hat{h}_E^k)$ du trajet de couplage d'écho à partir des secondes mesures ; et
- à régler le signal de suppression d'écho en se basant sur la seconde estimation.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015178932 A
- WO 2004114578 A
- US 2003235294 A
- EP 0202596 A2